# NEUE EUROPÄISCHE PATENTSCHRIFT

(11) **EP 0 166 919 B2**
(45) Veröffentlichungstag und Bekanntmachung des Hinweises auf die Entscheidung über den Einspruch: **23.02.1994**
(45) Hinweis auf die Patenterteilung: 27.01.1988
(21) Anmeldenummer: 85105646.5
(22) Anmeldetag: 08.05.1985
(51) Int. Cl.: B22D 19/00

(54) **Verfahren zur Herstellung von Heisskanaldüsen**
Method for producing hot channel nozzles
Procédé de fabrication des buses à canaux chauds

(30) Priorität: 04.07.1984 DE 3424492
(43) Veröffentlichungstag der Anmeldung: 08.01.1986
(73) Patentinhaber: Wolff, Hans-Martin, D-64409 Messel (DE)
(72) Erfinder: Wolff, Hans-Martin, D-64409 Messel (DE)
(74) Vertreter: Katscher, Helmut, Dipl.-Ing.

(56) Entgegenhaltungen:
- EP-A- 0 090 166
- EP-A- 0 099 118
- DE-A- 3 140 164
- DE-A- 3 214 884
- US-A- 3 470 936
- US-A- 4 355 460
- Source Book on Brazing and Brazing Technology, WRC Bulletin 187, Sept. 1973, Seiten 22-26
- LEYBOLD-HERAEUS, 1983, Seiten 2,4,19,26
- Ullmanns Enzyklopädie der technischen Chemie, 4. Aufl. Band 16, 1978, Seiten 316-317
- Lueger Lexikon, Band 9, 1968, Seiten 36-37
- Kleine Enzyklopädie Technik, VEB Leipzig, 1980, S. 288-289
- Prospekt Fa. Mahler, 9/1978

## Beschreibung

Die Erfindung betrifft ein Verfahren zur Herstellung von Heisskanaldüsen zum Einspritzen von thermoplastischer Kunststoffmasse in Formwerkzeuge durch Giessen von Kupferlot in einen zwischen einem Innenrohr und einem Aussenrohr gebildeten, an den Enden durch eine Düsenspitze bzw, einen sokkelseitigen Verschluss verschlossenen Hohlraum in den ein gewendeltes Heizelement eingelegt ist, wobei diese Teile miteinander verschweisst und zusammen mit einem an den Hohlraum angeschlossenen, das Kupferlot enthaltenden Giesstrichter in einem Gießofen auf die Giesstemperatur erhitzt werden.

Derartige Heisskanaldüsen dienen dazu, thermoplastische Kunststoffe in Formwerkzeuge einzuspritzen. Der Temperaturbereich, der hierbei bis zum Austritt des Kunststoffs aus der Düsenspitze eingehalten werden muss, ist bei einigen Kunststoffen sehr eng. Deshalb müssen die Heisskanaldüsen bis hin zur Düsenspitze möglichst gleichmässig beheizt werden. Das das Innenrohr umgebende gewendelte Heizelement wird deshalb in ein gut wärmeleitendes Material eingebettet, vorzugsweise eingegossen, das die vom Heizelement gelieferte Wärme gleichmässig verteilt und an das Innenrohr liefert. Das wärmeleitende Material muss lunkerfrei vergossen werden.

Bei einem bekannten Verfahren der eingangs genannten Gattung (DE-A-3 140 164) erfolgt das Giessen des den wärmeleitenden Körper bildenden Kupferlots im Vakuum. Der zur Erzeugung und Aufrechterhaltung des Vakuums erforderliche Aufwand ist erheblich. Ausserdem muss als Kupferlot eine Beryllium-Kupfer-Legierung verwendet werden, deren Wärmeleitfähigkeit jedoch wesentlich geringer als die von reinem Kupfer ist. Reines Kupfer kann jedoch im Vakuum nicht oder nur sehr schwer zu einem dickwandigen Körper lunkerfrei vergossen werden.

In der EP-A-0 099 118 ist die Herstellung eines Verteilerkopfes mit daran angebrachten Heisskanaldüsen beschrieben. Die zum Beheizen der Heisskanaldüsen bestimmten, gewendelten Heizelemente werden auch dort durch Vakuumgiessen im Kupfer eingebettet.

Es ist zwar bekannt (DE-A-32 14 884), bei der Herstellung von Heißkanaldüsen das Einbetten der Heizspirale in einem Formhohlraum mittels unlegiertem Kupfer im Teilvakuum in Anwesenheit eines Schutzgases durchzuführen. Hierbei stellt die Aufrechterhaltung des Teilvakuums und die Verwendung eines Vakuumofens hierfür jedoch ein wensentliches, unverzichtbares Verfahrensmerkmal dar, so daß der Aufwand für dieses Verfahren beträchtlich ist.

Aufgage der Erfindung ist es daher, ein Verfahren der eingangs genannten Gattung so auszubilden, dass mit geringerem Aufwand ein lunkerfreier, dickwandiger Körper von hoher Wärmeleitfähigkeit gegossen werden kann, der das Heizelement aufnimmt und eine gute thermische und mechanische Verbindung mit dem aus korrosionsfestem Stahl bestehenden Innenrohr und Aussenrohr erzielt.

Diese Aufgabe wird erfindungsgemäss dadurch gelöst, dass der Giessvorgang in einer Schutzgasatmosphäre erfolgt, wobei kein wesentlicher Druckunterschied zwischen dem Ofenraum und der Umgebung besteht. Diese Schutzgasatmosphäre lässt sich in bekannterweise in einem Giessofen mitwesentlich geringerem Aufwand erzeugen als ein Vakuum, weil kein wesentlicher Druckunterschied zwischen dem Ofenraum und der Umgebung besteht. Ein besonderer Vorteil des erfindungsgemässen Verfahrens besteht darin, dass als Kupferlot reines Kupfer verwendet werden kann, das im Vergleich zu den hierfür üblichen Kupferlegierungen die höchste Wärmeleitfähigkeit hat.

Vorzugsweise wird als Kupferlot reines Elektrolytkupfer verwendet.

In Weiterbildung des Erfindungsgedankens ist vorgesehen, dass in den Hohlraum ein am Düsensockel mündendes Leerrohr vor dem Giessvorgang eingelegt wird, das bis in den mittleren Bereich des Heizelements reicht. Durch das Leerrohr kann anschliessend ein Thermofühler gesteckt werden, der die Temperatur in dem Bereich erfasst, wo das Heizelement in der Aufheizphase die grösste Heizkraft entwickelt. Durch diese Anordnung des Thermofühlers erfolgt die Abschaltung der Heizung genau zu dem Zeitpunkt, in dem die gewünschte Temperatur erreicht ist. Die zu diesem Zeitpunkt noch kälteren Aussenbereiche der Heisskanaldüse werden mit einer gewissen zeitlichen Verzögerung erwärmt. Eine Überhitzung wird dadurch vermieden. Dies ist bei sehr empfindlichen Kunststoffen sehr wichtig, die in vielen Fällen nur einen Temperaturbereich von wenigen °C zulassen.

Vorzugsweise wird als Schutzgas NH₃-Spaltgas mit ca. 75% Wasserstoff und ca. 25% Stickstoff verwendet.

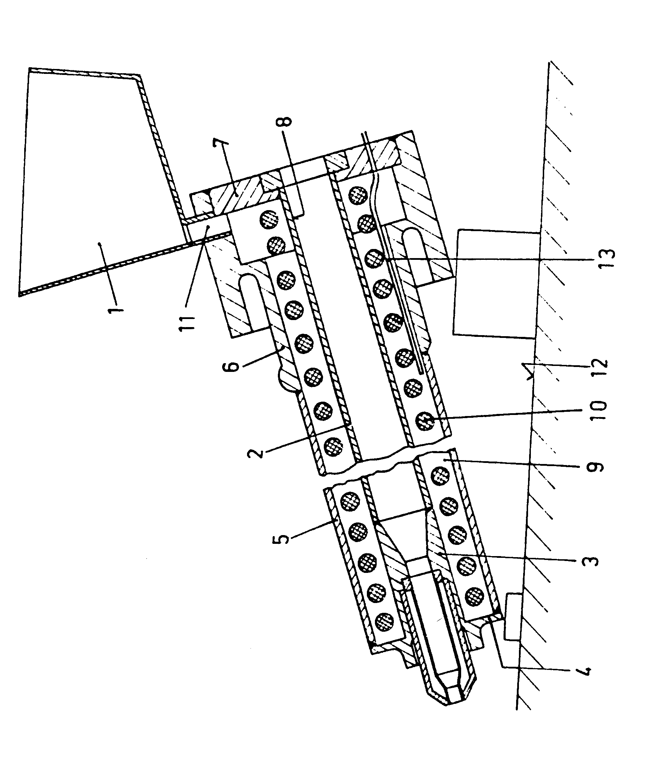

Die Erfindung wird nachfolgend an einem Ausführungsbeispiel der Zeichnung näher erläutert.

Die Zeichnung zeigt im Längsschnitt die miteinanderverbundenen und zum Giessvorgang vorbereiteten Teile einer Heisskanaldüse mit aufgesetztem Giesstrichter 1. Ein aus V2A-Stahl nach DIN 4301 bestehendes Innenrohr 2 ist an seinem einen Ende mit der Düsenspitze 3 verschweisst, deren rohrförmiger Abschnitt eine Fortsetzung des Innenrohres 2 bildet. Ein nach aussen gerichteter Flansch 4 der Düsenspitze 3 ist mit einem Aussenrohr 5 verschweisst, das konzentrisch zu dem Innenrohr 2 angeordnet ist und an seinem anderen Ende mit einem Düsensockel 6 verschweisst ist. Der Düsensockel 6 ist mit einem Verschlussring 7 verschweisst, der an seinem Innendurchmesser wiederum mit dem Ende des Innenrohres 8 verschweisst ist.

Auf diese Weise wird ein geschlossener Hohlraum 9 gebildet, in den ein gewendeltes Heizelement 10 eingelegt ist. Der Hohlraum 9 ist überein Giessrohr 11 mit dem Giesstrichter 1 verbunden.

Vor dem Giessvorgang werden die in der beschriebenen Weise miteinander verbundenen Teile der Heisskanaldüse in der in der Zeichnung dargestellten schrägen Anordnung in einem Giessofen aufgenommen, von dem in der Zeichnung nur der Boden 1 2 angedeutet ist. In dieser schrägen Anordnung befindet sich das Giessrohr 11 an der höchsten Stelle des Hohlraumes 9.

Das Aussenrohr 5 besteht aus V2A-Stahl nach DIN 4301; der Düsensockel 6 und die Düsenspitze 3 können aus Stahl nach DIN 2083 oder 2343/44 hergestellt sein, die für eine Schutzgasbehandlung geeignet sind.

Vor dem Giessen wird das zu verwendende Kupferlot in den Giesstrichter 1 gebracht, beispielsweise reines Elektrolytkupfer. Die in der Zeichnung gezeigte Anordnung wird dann im Schutzgasofen in einer aus NHₐ-Spaltgat mit ca. 75% Wasserstoff und ca.25% Stickstoff bestehenden Schutzgasatmosphäre auf die erforderliche Giesstemperatur von etwa 1083 bis 1120°C erhitzt. Der hierbei verwendete Schutzgasofen kann ein Durchlaufofen oder Standofen sein.

Das Kupferlot schmilzt im Giesstrichter 1 und fliesst in den Hohlraum 9, den es vollständig und lunkerfrei ausfüllt. Durch die schräge Anordnung der vorbereiteten Heisskanaldüse werden Gaseinschlüsse vermieden. Die Menge des verwendeten Kupferlots ist so dosiert, dass ein geringfügiger Überschuss besteht. Diese überschüssige Menge kann überlaufen und abtropfen. Die dadurch entstehenden Angussreste werden anschliessend mechanisch entfernt.

Wie in der Zeichnung dargestellt, kann vor dem Giessvorgang ein kleines Leerrohr 13 einmontiert werden, das im Bereich des Verschlusses 7 mündet und das beim Giessen eingebettet wird. Das Leerrohr 13 reicht im Hohlraum 9 bis in den mittleren Bereich des Heizelementes 10. Durch dieses Leerrohr 13 wird anschliessend ein Thermofühler gesteckt, der zur Steuerung des Heizvorganges dient.

Einzelheiten der Kabelführung zum Heizelement 10 sind in der Zeichnung der Einfachheit halber weggelassen.

Die Wärmeleitfähigkeit des zum Ausfüllen des Hohlraumes 9 verwendeten reinen Elektrolytkupfers liegt bei 0,80 - 0,88 kcal/cm. sec. °C und istdamitwesentlich besser als die Wärmeleitfähigkeit einer üblichen Kupfer-Zinnlegierung mit etwa 1 - 12% Zinn, die bei 0,60 - 0,75 kcal/cm - sec . °C liegt.

## Patentansprüche

1. Verfahren zur Herstellung von Heisskanaldüsen zum Einspritzen von thermoplastischer Kunststoffmasse in Formwerkzeuge durch Giessen von-Kupferlot in einen zwischen einem Innenrohr (2) und einem Aussenrohr (5) gebildeten, an den Enden durch eine Düsenspitze (3) bzw. einen sockelartigen Verschluss (6) verschlossenen Hohlraum (9), in den ein gewendeltes Heizelement (10) eingelegt ist, wobei diese Teile miteinander verschweisst und zusammen mit einem an den Hohlraum (9) angeschlossenen, das Kupferlot enthaltenden Giesstrichter (1) in einem Gießofen auf die Giesstemperatur erhitzt werden, dadurch gekennzeichnet, dass der Giessvorgang in einer Schutzgasatmosphäre erfolgt, wobei kein wesentlicher Druckunterschied zwischen dem Ofenraum und der Umgebung besteht.

2. Verfahren nach Anspruch 1, dadurch gekennzeichnet, dass als Kupferlot reines Elektrolytkupferverwendet wird.

3. Verfahren nach Anspruch 1, dadurch gekennzeichnet, dass in den Hohlraum (9) ein am Düsensockel (6) mündendes Leerrohr (13) vor dem Giessvorgang eingelegt wird, das bis in den mittleren Bereich des Heizelementes (10) reicht.

4. Verfahren nach Anspruch 1, dadurch gekennzeichnet, dass als Schutzgas NH₃-Spaltgas mit ca. 75% Wasserstoff und ca. 25% Stickstoff verwendet wird.

## Claims

1. Method for producing hot channel nozzles for the injection of thermoplastic compound into moulding tools by casting copper filler metal into an enclosed cavity (9) formed between an inner tube (2) and an outer tube (5), sealed at the ends by a nozzle tip (3) and a closure on the base side (6), a coiled heating element (10) being inserted into the cavity, these parts being welded to each other and heated up to the casting temperature in a casting furnace together with a feeding head (1) containing the copper fitting metal attached to the cavity (9), characterised by the fact that the casting process takes place in a protective gas atmosphere whereby there is no significant pressure difference between the furnace space and the environment.

2. Method according to Claim 1, characterised by the fact that pure electrolytic copper is used as the copper filling metal.

3. Method according to Claim 1, characterised by the fact that an empty tube (13) embouching at the nozzle base (6) is inserted into the cavity (9) before the casting process, reaching as fas as the central area of the heating element (10).

4. Method according to Claim 1, characterised by the fact that NH3 cracked gas with approximately 75% hydrogen and approximately 25% nitrogen is used as the protective gas.

## Revendications

1. Procédé pour la fabrication de buses à canal chaud destinées à l'injection d'une matière synthétique thermoplastique dans des outils de formage, par coulée de cuivre d'apport dans un espace vide (9) compris entre un tube intérieur (2) et un tube extérieur (5) et obturé aux extrémités par une tête de buse (3) et un obturateur (6) du côté de la base, un élément chauffant hélicoïdal (10) étant monté dans ledit espace vide, ces parties étant assemblées par soudage et chauffées jusqu'à température de coulée dans un four de coulée en combinaison avec un entonnoir de coulée (1) qui contient le cuivre d'apport et qui est raccordé à l' espace vide (9), caractérisé en ce qu'on effectue l'étape de coulée sous atmosphère de gaz protecteur, à quoi il n'y a pas de différence de pression notable entre l'enceinte du four et son environnement.

2. Procédé selon la revendication 1 caractérisé en ce qu'on utilise, comme cuivre d'apport, du cuivre électrolytique pur.

3. Procédé selon la revendication 1 caractérisé en ce qu'on introduit avant l'étape de coulée, dans l'espace vide (9), un tube creux (13) aboutissant à la base (6) de la buse et s'étendant jusque dans la zone médiane de l'élément chauffant (10).

4. Procédé selon la revendication 1 caractérisé en ce qu'on utilise, à titre de gaz protecteur, du gaz résultant de la décomposition de NH₃, comportant environ 75% d'hydrogène et 25% d'azote.
